# FASCICULE DE BREVET EUROPEEN

(11) **EP 1 588 817 B1**
(45) Date de publication et mention de la délivrance du brevet: **13.08.2008**
(21) Numéro de dépôt: 05290515.5
(22) Date de dépôt: 08.03.2005
(51) Int. Cl.: B28D 1/06, B23D 49/00, B23D 49/11

(54) **Aménagement d'une scie sauteuse électroportative pour découpe de saignées dans cloisons**
Anpassung einer Stichsäge zum Schneiden von Nuten in Mauern
Adaptation of a portable jig-saw for cutting grooves in walls

(30) Priorité: 24.03.2004 FR 0403027
(43) Date de publication de la demande: 26.10.2005
(73) Titulaire: Ostoj, Francois, 95280 Jouy Le Moutier (FR)
(72) Inventeur: Ostoj, Francois, 95280 Jouy Le Moutier (FR)

(56) Documents cités:
- CH-A- 328 167
- DE-U- 8 808 036
- US-A- 4 235 017
- US-A- 4 719 701
- US-A- 5 010 652
- US-A- 5 087 261
- US-H- H 571
- DATABASE WPI Section PQ, Week 199510 Derwent Publications Ltd., London, GB; Class P54, AN 1995-073191 XP002341696 -& NL 9 301 193 A (POSTMA A) 1 février 1995 (1995-02-01)

## Description

La présente invention concerne une scie sauteuse électroportative selon le préambule de la revendication 1 permettant d'effectuer aisément des découpes droites ou courbes pour réaliser des saignées dans des murs de séparation maçonnés en éléments de plâtre, dans des cloisons légères ou dans des parois d'isolation thermiques doublées d'une épaisseur de plâtre, appliquées contre les murs intérieurs d'habitations ou de locaux divers. Ces saignées serviront à l'encastrement de câbles électriques, de petites gaines ou de tuyauteries.

Une telle scie est connue du document US-A-4719701.

Pour ce faire, il est aussi utilisé soit une lame de scie égoïne, soit une scie circulaire électroportative qui oblige à effectuer un seul trait de scie à la fois pour une largeur de saignée qui n'est pas toujours régulière et qui génère beaucoup de poussière. Parfois il est aussi utilisé une fraise montée sur une perceuse électroportative pour de faibles longueurs, largeurs et profondeurs tout en générant aussi beaucoup de poussière.

Une scie sauteuse permettant de remédier à ces inconvénients est définie par la revendication indépendante 1. Des modes de réalisations avantageux sont quant à eux définis par les revendications dépendantes 2 à 7.

Les dessins représentés sur les 5 planches annexées illustrent l'invention :
Planche 1/5 :
   La figure 1 représente, en élévation et en coupe partielle, le dispositif de l'invention.
   La figure 2 représente la vue de côté du dispositif de l'invention avec ses deux lames de scie (6) en position extrême. (Ecartement maxi ici représenté)
Planche 2/5 :
   La figure 3 représente le porte-lame composé des pièces (3), (4) et (5) avec ses différentes saignées (s), (s3) et (s4) pour le positionnement des deux lames de scie.
   La figure 4 représente le guide cylindrique (17) avec ses gorges circulaires où viennent se loger les deux lames de scie pour être maintenues en écartement et en position verticale.
Planche 3/5 :
   La figure 5 représente le support (10) qui sera fixé sur la scie sauteuse et permettra l'adaptation de la semelle (11) pour régler la profondeur de coupe.
   La figure 6 représente la semelle (11) qui permettra le réglage de la profondeur de coupe par rotation sur son axe 13
Planche 4/5 :
   La figure 7 représente la semelle (12) qui sera appliquée sur la surface à découper. Elle est réglable latéralement par l'intermédiaire de deux lumières (27) et (28) et possède une encoche en V sur l'avant pour permettre de suivre le tracé de l'axe lors de la découpe de la saignée. Cette encoche ne peut pas servir lors d'un réglage latéral de la semelle. Une découpe (26), à l'avant dans la semelle, est prévue pour le passage des deux lames de scie et pour son réglage latéral.
Planche 5/5 :
   La planche 5/5 ne faisant pas partie de l'invention, représente la variante numéro 2 du dispositif de fixation des deux lames de scie:

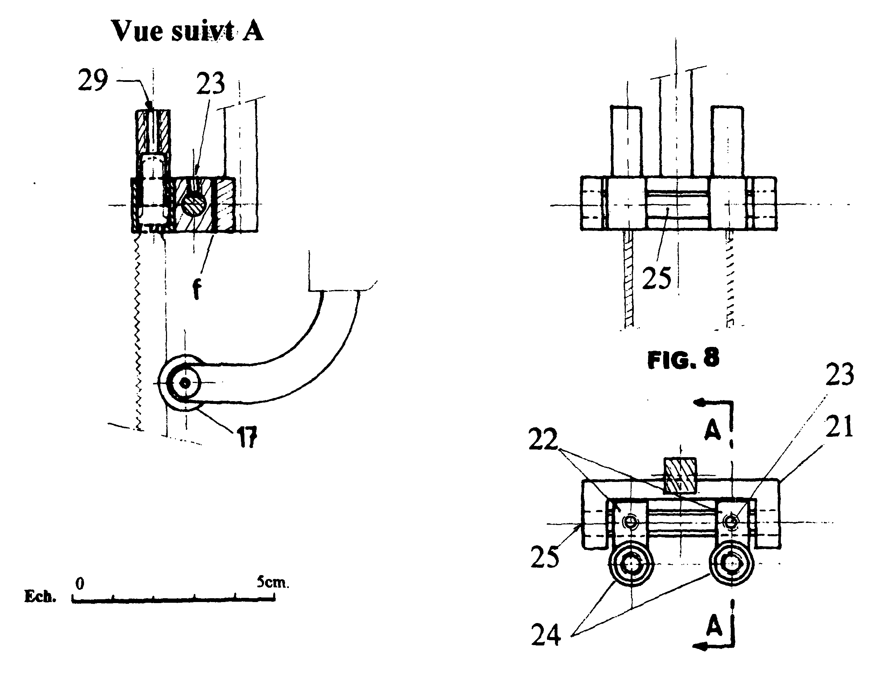

   La figure 8 représente les deux porte-lames de scie sauteuse réglables en écartement par coulissement sur un axe de section carrée ou ronde. Dans le cas d'un axe de section ronde, il comportera sur le dessus un méplat sur toute sa longueur. L'immobilisation des deux porte-lames à leurs positions définies se fera à l'aide d'une vis, située sur le dessus de chaque bossage et venant s'appliquer sur une face ou le méplat de l'axe. Les faces des deux bossages appliquées contre la face interne du support en U sont planes et verticales ce qui maintient les porte-lames en position verticale.

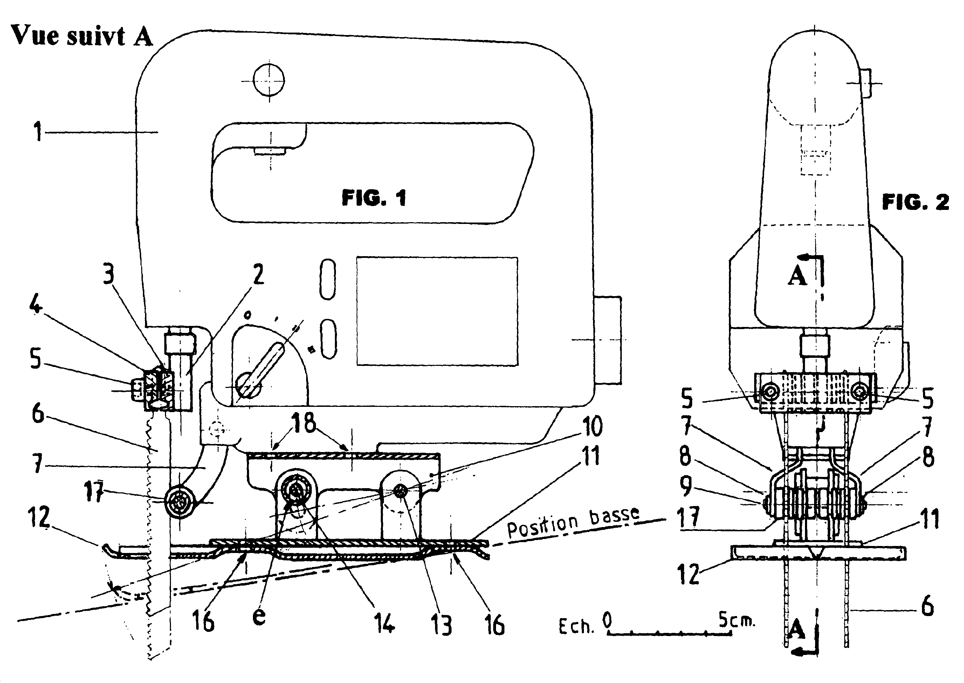

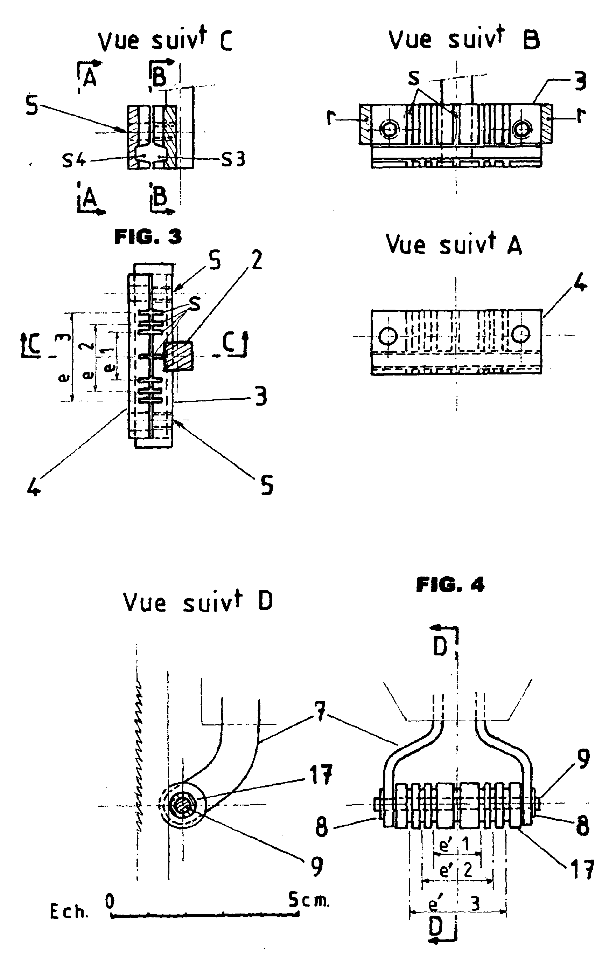

En référence aux dessins représentés sur les 5 planches, le dispositif d'aménagement d'une scie sauteuse (1) comporte :
- Un porte outil composé des pièces (2), (3), (4) et (5) planche 1/5 FIG.1 et planche 2/5 FIG.3.

Le repère (2) représente l'aménagement de l'extrémité de l'axe de la scie sauteuse permettant la fixation du porte lame de scie composé des pièces (3), (4) et (5).
Cet aménagement peut être tout simplement le prolongement de l'axe vertical existant de la scie sauteuse ou un dispositif de raccordement fixe, démontable de l'extrémité de cet axe. Cet axe donnant le mouvement de va-et-vient est, pour la partie sortante du corps de la scie sauteuse, de section carrée, rectangulaire ou tout autre forme angulaire. Pour ne pas transmettre les efforts de torsion subits lors de la découpe de saignées en courbe, il passe par un orifice ou par un tronçon de gaine, de section correspondante et solidaire du corps de la scie

La pièce arrière (3) du porte-lame est solidaire de l'axe de la scie sauteuse.

Les deux pièces (3) et (4) planche 2/5 FIG.3 du porte-lame sont pourvues chacune de saignées verticales (s) (ici 7 saignées sont représentées mais non limitatives) Ces saignées correspondent, en largeur, à l'épaisseur de la lame de scie et en profondeur, légèrement inférieure à une demi largeur de lame ce qui laisse, lors de leur assemblage, un léger jeu pour le serrage.

La pièce (3) comporte aux deux extrémités un rebord (r), planche 2/5 FIG.3, Vue suivt B, qui permet l'encastrement ajusté de la pièce (4). Lors du serrage des deux lames de scie par l'intermédiaire des deux vis (5), les pièces (3) et (4) sont guidées et ne risquent pas de glisser sur le côté. Cela permet aussi aux deux lames de scie d'être maintenues dans leur position respective.

Les deux pièces (3) et (4) ont chacune, à la base, une saignée horizontale (s3) ou (s4), comme représenté sur la planche 2/5, FIG.3 (vue suivt A, B et C), permettant l'encastrement du décrochement profilé dans certaines lames de scie. Cela permet aussi le positionnement en hauteur des lames de scie dans le porte-lame.

Les écartements (e1) (e2) et (e3), planche 2/5 FIG.3, entre les saignées d'encastrement des lames de scie correspondent à la largeur des saignées à découper dans les parois.

Ces écartements seront déterminés en fonction des diamètres les plus courants des gaines électriques, des câbles ou des tuyauteries à encastrer. A titre d'exemple et non limitatif, les largeurs de saignées à découper seraient de 14, 20 et 26mm. La profondeur serait déterminée en fonction de l'épaisseur des parois à entailler, à titre d'exemple et non limitatif, entre 35 et 55mm.

Pour la réalisation de saignées d'encastrement plus larges que celles prévues aux écartements (e1), (e2) et (e3), il suffit de mettre en place une seule lame de scie dans la saignée centrale (s) du porte lame et de réaliser les 2 découpes de la saignée séparément. Dans ce cas il est aussi possible d'utiliser la scie sauteuse comme une scie sauteuse classique équipée d'une seule lame et de réaliser des découpes carrées ou rondes pour l'encastrement de boîtiers, d'interrupteurs ou de prises électriques après avoir réglé la profondeur de coupe comme décrit ci-après.

Le maintien en position d'écartement et en position verticale des deux lames de scie, lors de leur utilisation, est assuré par un guide cylindrique (17),planche 2/5 FIG.4 appliqué derrière ces deux lames et comportant des gorges circulaires où elles viennent se loger. La largeur et leurs positions correspondent aux saignées des deux pièces (3) et (4) du porte lame.

Les écartements (e'1), (e'2) et (e'3) du guide cylindrique correspondent exactement aux écartements (e1), (e2) et (e3) du porte outil FIG.3 de la même planche.

Ce guide cylindrique (17) est en rotation libre sur son axe (9) supporté par deux bras (7).Une rondelle fendue (8) sertie dans une gorge cylindrique à chaque extrémité de l'axe (9) le maintien en position entre ses deux bras (7).Les deux bras (7) sont fixés sur le corps de la scie sauteuse comme ceux des différentes scies sauteuses existantes dans le commerce.

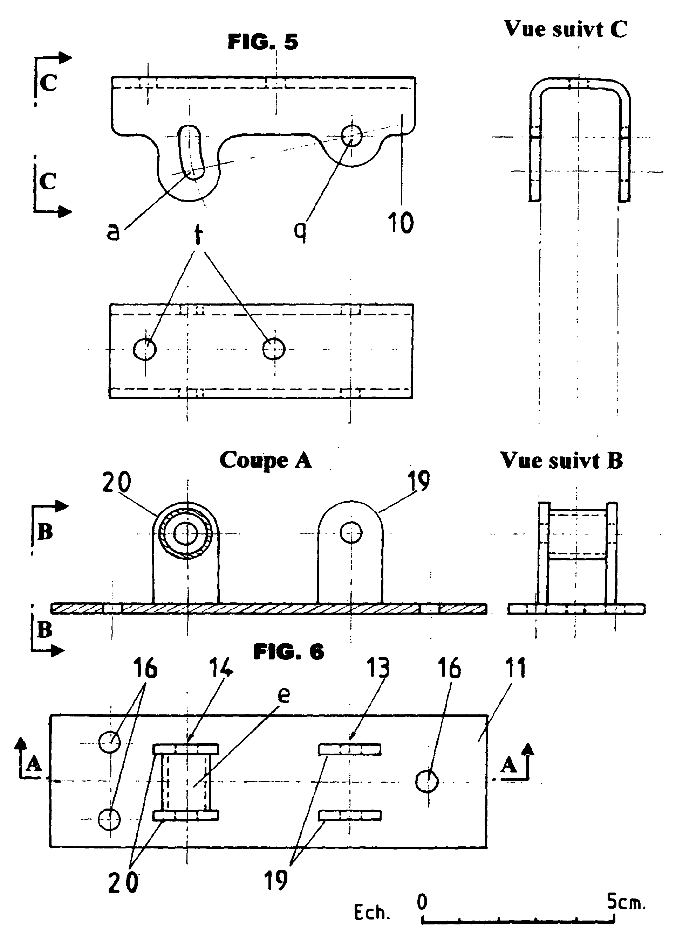

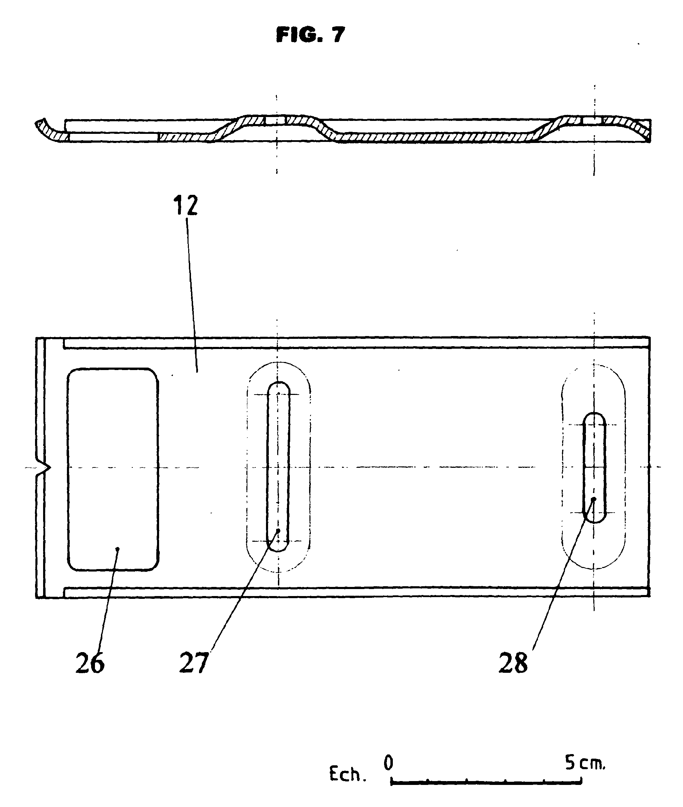

La profondeur de coupe des saignées d'encastrement à réaliser dans les parois est réglable par l'intermédiaire de la semelle inclinable (12). planche 1/5, FIG.1 et détail FIG.7, planche 4/5. Cette semelle (12), planche 1/5, est fixée sur un support (11), planche 1/5 FIG.1 et planche 3/5 FIG.6,par 3 boulons (16). Ce support (11) est articulé sur un axe (13) et maintenu en position par un axe boulon (14) se déplaçant dans une lumière en forme d'arc de cercle (a) du support (10).

L'axe boulon (14) a une tête à une extrémité et l'autre est filetée. Sur cette partie filetée sont positionnés une rondelle et un écrou permettant, par serrage, de maintenir réglé la profondeur de coupe.

Le support articulé (11) planche 3/5, FIG.6 est équipé de quatre oreilles =
- deux oreilles (19) percées d'un trou pour le passage de l'axe (13) permettant son articulation sur son support fixe (10), planche 3/5 FIG.5.
- deux oreilles (20) percées d'un trou pour le passage de l'axe boulon (14) permettant par serrage de maintenir le réglage en profondeur de coupe de la lame de scie. Cet axe coulisse dans les deux lumières en forme d'arc de cercle (a) du support (10) FIG.5 planche 3/5.

Ces deux oreilles (20) FIG.6, planche 3/5, sont reliées entre elles par une entretoise tubulaire (e) qui permet de maintenir leur écartement lors du serrage de l'écrou sur son axe (14)

Le support fixe (10) planche 3/5 FIG.5 et planche 1/5 FIG.1 est fixé sur le châssis de la scie sauteuse par 2 vis (18), suivant le type de fixation existant de la semelle et passant par les trous (t). Il comprend deux oreilles percées chacune d'un trou (q) pour le passage de l'axe d'articulation (13) du support (11) FIG.6 et deux autres oreilles percées d'une lumière (a) en forme d'arc de cercle pour le passage de l'axe boulon (14).

A titre d'exemple et non limitatif, la profondeur de coupe serait réglable entre 35 et 55mm. (Voir FIG.1 planche 1/5).

En variante N°1, la profondeur de coupe peut être obtenue par l'utilisation de lames de scie de longueur adaptée à la profondeur de coupe souhaitée.

En variante N°2, suivant planche 5/5 ne faisant pas partie de

l'invention le porte-outil est composé de deux porte-lames de scie indépendants (24) ayant à l'arrière un bossage (22) percé d'un trou lisse permettant de coulisser sur un axe horizontal (25) carré ou rond. Dans le cas d'un axe de section ronde, il comportera un méplat sur le dessus sur toute sa longueur. Cet axe (25) est solidaire d'un support en forme de U (21) qui lui-même est solidaire de l'axe vertical de la scie sauteuse.

Le maintien en position réglée de l'écartement des deux porte-lames sur leur axe (25) est assuré par une vis de blocage (23) qui vient s'appliquer par serrage sur le méplat de l'axe. Les deux bossages (22) ont leur face externe (f) plane qui glisse contre la face interne du support en U (21).Cela permet de les maintenir en position verticale et les empêche de tourner.

Les deux porte-lames sont identiques à ceux équipant la plupart des scies sauteuses existantes et munis d'un système de fixation « rapide » ou par vis de blocage (29) en fonction du constructeur. Le maintien en position d'écartement et en position verticale des deux lames de scie lors de leur utilisation est assuré par un guide cylindrique (17) planche 2/5 FIG.4, venant s'appliquer derrière les lames de scie en action. Il comprend des gorges circulaires où viennent se loger les deux lames de scie. Les entre axes de ces gorges circulaires sont prédéfinis en fonction des largeurs de saignées les plus courantes à réaliser dans les parois.

## Revendications

1. Scie sauteuse électroportative comportant, sur son axe vertical donnant le mouvement de va et vient, un porte outil permettant la fixation et l'utilisation simultanée de deux lames de scie réglables en écartement et en profondeur de coupe pour effectuer des découpes pour la réalisation de saignées servant à l'encastrement de câbles électriques, de petites gaines ou tuyauteries dans des murs de séparation maçonnés en éléments de plâtre, dans des cloisons légères ou dans des parois d'isolation thermique ou phonique doublées d'une épaisseur de plâtre et appliquées contre les murs,
**caractérisée par** :
- ledit axe donnant le mouvement de va-et-vient est, pour la partie sortante du corps de la scie sauteuse, de section carrée, rectangulaire ou tout autre forme angulaire, et passe par un orifice ou par un tronçon de gaine, de section correspondante et solidaire du corps de la scie, afin de ne pas transmettre les efforts de torsion subits lors de la découpe de saignées en courbe;
- le dit axe vertical de la scie sauteuse étant soit le prolongement direct de l'axe, soit un élément soudé, soit le raccordement par filetage à l'extrémité de cet axe.
- un porte-lame de scie, composé de pièces: un élément arrière (3), un élément avant (4) et deux vis d'assemblage (5) ledit porte-lame étant solidaire dudit axe vertical de la scie sauteuse par l'intermédiaire de l'élément arrière (3); les deux éléments arrière (3) et avant (4) étant pourvus chacun de saignées concordantes verticales (s) à écartements prédéfinis (e1), (e2), et (e3); lesdits écartements entre ces saignées étant fonction des largeurs de saignées à réaliser dans les parois; lesdites saignées verticales(s) dans les deux éléments arrière (3) et avant (4) dudit porte-lame, ayant une largeur correspondant à l'épaisseur desdites deux lames de scie et une profondeur légèrement inférieure à une demi largeur desdites lames afin d'assurer un léger jeu pour le serrage lors de l'assemblage desdits éléments arrière (3) et avant (4); l'élément arrière (3) dudit porte-lame comportant aux deux extrémités un rebord (r) permettant l'encastrement ajusté de l'élément avant (4) dudit porte-lame; lesdites deux lames de scie, en position dans leur saignée respective correspondant à l'écartement choisi, étant serrées entre les deux éléments arrière et avant (3)et(4)dudit porte-lame par l'intermédiaire de deux vis (5);
ledit élément avant (4) restant guidé entre les deux rebords extrêmes (r) dudit élément arrière (3) permet de ne pas glisser sur le côté, ce qui maintient les deux lames de scie en position.

2. Scie sauteuse selon la revendication 1 **caractérisée par** une saignée (s3) ou (s4) trapézoïdale et horizontale qui est effectuée sur la face interne et à la base de chacun des deux éléments arrière (3) et avant (4) dudit porte-lame; la dite saignée trapézoïdale permettant l'encastrement du décrochement qui est profilé dans certaines lames de scie et assure le positionnement en hauteur desdites lames dans le porte-lame.

3. Scie sauteuse selon la revendication 2 **caractérisée par** un guide cylindrique (17) venant s'appliquer derrière les deux lames de scie en action tout en maintenant leur écartement et leur position verticale; ledit guide cylindrique (17) comportant des gorges circulaires où viennent s'encastrer lesdites lames de scie; la largeur des gorges correspondant à l'épaisseur desdites lames de scie et leurs positions (e'1, e'2 et e'3) correspondant exactement aux positions (e1, e2 et e3) des saignées verticales effectuées dans les deux éléments arrière (3) et avant (4) dudit porte-lame dans lesquelles viennent se positionner lesdites lames de scie; ledit guide cylindrique (17) étant en rotation libre sur un axe (9) et supporté par deux bras (7); une rondelle fendue (8) et sertie dans une gorge circulaire à chaque extrémité dudit axe (9) le maintenant en position entre ses deux bras (17); lesdits deux bras (7) étant fixés sur le corps de la scie sauteuse

4. Scie sauteuse selon la revendication 3 **caractérisée par** un ensemble composé d'une semelle d'appui (12), d'un support articulé (11) et d'un support fixe (10); la semelle (12) étant inclinable par l'intermédiaire dudit support articulé (11), ce qui permet de régler la profondeur de coupe des lames de scie dans la paroi à entailler, et la profondeur des saignées d'encastrement ;
ladite semelle (12) étant fixée sur ledit support articulé (11) par trois boulons (16); ledit support articulé (11) comportant quatre oreilles est articulé sur un axe (13) et maintenu en position par l'intermédiaire d'un axe boulon (14); les quatre oreilles dudit support consistant en;
- deux oreilles arrière (19) percées d'un trou pour le passage d'un axe (13) permet tant, par son passage dans les perçages (q) dudit support fixe (10) l'articulation de l'ensemble support articulé (11) et de la semelle d'appui (12);
- deux oreilles avant (20) percées d'un trou pour le passage d'un axe boulon (14) se déplaçant dans les deux lumières (a) en forme d'arc de cercle dudit support fixe(10) permettant le réglage de la profondeur de coupe des deux lames de scie; le maintien en position étant assuré par le serrage de l'écrou sur son axe (14); lesdites oreilles (20) étant reliées entre elles par une entretoise tubulaire (e) qui maintient leur écartement lors du serrage de l'écrou sur son axe (14);
le support fixe (10) étant fixé sur le châssis de la scie sauteuse par deux vis (18), passant par les trous (t) du support fixe.

5. Scie sautense selon la revendication 4 **caractérisée par** une encoche en forme de V au milieu et sur le bord avant de ladite semelle d'appui (12); ladite encoche permettant de suivre, lors de la découpe, le tracé de l'axe de la saignée

6. Scie sauteuse selon la revendication 5 **caractérisée par** des lumières (27), (28) effectuées dans ladite semelle d'appui (12) pour permettre le réglage latéral de la position de ladite semelle d'appui (12) sous ledit support fixe (11), ledit réglage latéral permettant d'effectuer des découpes dans les cloisons au plus près des obstacles tel que les châssis de porte, de fenêtre ou les angles rentrants, ladite encoche en forme de V n'étant alors pas utilisée comme guide de tracé; une découpe (26) dans ladite semelle (12) à l'avant étant prévue pour le passage des deux lames de scie tout en permettant le réglage latéral de celles-ci.

7. Scie sauteuse selon la revendication 6 **caractérisée par** l'utilisation de lames de scie de longueurs adaptées à la profondeur de coupe désirée; le support articulé (11) de la semelle d'appui (12) étant fixé horizontalement sur son support (10) de façon non inclinée.

## Claims

1. Portable electric jigsaw, bearing on its vertical axis, which gives the backward and forward motion, a tool holder enabling the fixing and simultaneous use of two saw blades that can be fixed accordingly in width and depth to cut holes to insert electric cables, flexible sheathes or small pipes in plaster built walls, light separation walls or in thermal or sound proofing isolation material covered with a light plaster layer and fixed against walls,
**Characterized by** :
- said axis, which gives the backward and forward motion, is as far as the raising part of the body of the saw is concerned constructed in a square form, a rectangular form or in any other angle form, and goes through a hole or a part of sheath, the dimension of which corresponds jointly with the body of the saw, so that the twisting efforts undergone during the cutting of the curved holes are not transmitted ;
- said vertical axis of the jigsaw can be either the direct extension of the axis or a welded part or also a junction to the end of this axis by threading.
- a saw blade holder, composed of various parts: a back part (3), a front part(4) and two assembling screws (5), said blade holder being interdependent with the said vertical axis of the jigsaw through the intermediary of the back part (3) ; the two back (3) and front parts (4) bearing each of them vertical concordant holes (s) with predefined spaces (e1), (e2), et (e3) ; said spaces between the holes are depending on the width of the holes to be cut into the walls ; said vertical holes (s) in the two back (3) and front (4) parts of the said blade holder have a width that corresponds with the thickness of the afore said two saw blades and a depth that is slightly inferior to the half width of said blades, enabling thus a light play for the tightening whilst assembling said back (3) and front (4) parts ; the back part (3) of the afore said blade holder is constituted at its two back (3) and front (4) parts by an edge (r) enabling the adjusted fitting of the front part (4) of the said blade holder ; the said two saw blades positioned in their respective holes corresponding to the chosen spacing are tightened between the two back and front parts (3) and (4) of the said blade holder by two screws (5) ; the said front part (4) remaining guided between the two extreme edges (r) of the back part (3) avoids thus to slide aside, which maintains the two saw blades in position.

2. Jigsaw according to claim 1 **characterized by** a trapezoidal and horizontal hole (s3) or (s4) that is made on the internal part and on the basis of each of the two back (3) and front (4) elements of said blade holder ; the afore mentioned trapezoidal hole that enable the fitting of the raising profile of certain saw blades and ensures the upside positioning of said blades in the saw blade holder.

3. Jigsaw according to claim 2 **characterized by** a cylindrical guide (17) which comes in application behind the two activated saw blades by maintaining at the same time the space in between them as well as their vertical position ; this cylindrical guide (17) is constituted by circular grooves in which said saw blades will fit in ; the width of these grooves are corresponding to the thickness of the involved saw blades and their respective positions (e'1, e'2 et e'3) are corresponding exactly with the positions (e1, e2 et e3) of the vertical holes cut into the two back (3) and front (4) parts of the afore mentioned saw blade holder and in which the saw blades are taking place ; the above mentioned cylindrical guide (17) turns free on an axis (9) and is supported by two arms (7) ; a cracked washer (8),set in a circular groove on each end part of said axis (9) which keeps it in position between its two arms (17) ; the mentioned two arms (7) are fixed onto the body of the jigsaw.

4. Jigsaw according to claim 3 **characterized by** a set constituted by a bed plate (12), an articulated support (11) and a fix support (10); the bed plate (12) being reclining by the intermediary of said articulated support (11) it is possible to set the cutting depth of the saw blades in the wall to be notched as well as the depth of the holes ; the said bed plate being fixed on the afore mentioned articulated support (11) by three bolts (16) ; the above mentioned articulated support (11) which has four wings is articulated on an axis (13) and maintained in position through a bolt axis (14) ; the four wings of said articulated support are consisting of the following :
- two back wings (19) pierced by a hole to enable the passing through of an axis (13), enabling thus due to its passing through the pierced parts (q) of the fix support (10) the articulation of the global set comprising the articulated support (11) and the bed plate (12) ;
- two front wings (20) pierced by a hole to enable the passing through of a bolt axis (14) to move into the two bow form notches (a) of the said fix support (10) enabling thus the setting of the cutting depth of the two saw blades ; the tightening of the bolt on its axis (14) ensures that the system is kept in position ; the afore said wings (20) are being liaised in between each other by a tubular spacer (e) which maintains the space in between them whilst the bolt is being tightened on its axis (14) ; the fix support (10) is being fixed onto the body of the jigsaw by two screws (18), passing through the holes (t) of the fix support.

5. Jigsaw according to claim 4 **characterized by** a V form notch in the middle and on the edge of the afore mentioned bed plate (12) ; the notch enables to follow, during the cutting, the exact drawing of the centre line of the hole.

6. Jigsaw according to claim 5 **characterized by** notches (27), (28) cut in the above mentioned bed plate (12) to enable the lateral setting of the position of this bed plate (12) under the fix support (11), whilst said lateral setting enables the cutting in walls at the closest distance of hindrances like door or windows frames or reflex angles, in such case the above mentioned V form notch is not used as a guide to plan the layout ; a cutting (26) within the front part of the afore said bed plate (12) is being foreseen for the passing through of two saw blades enabling at the same time the lateral setting of them.

7. Jigsaw according to claim 6 **characterized by** the use of saw blades with length adapted to the wished cutting depth ; the articulated support (11) of the bed plate (12) being fixed horizontally on its support (10) in a none inclined way.

## Patentansprüche

1. Handbewegliche Elektrostichsäge, die aus einem, auf der zur Pendelbewegung dienenden senkrechten Achse, fixierten Sägeblatthalter besteht, der die Befestigung und die gleichzeitige Benutzung von zwei Sägeblättern ermöglicht, die sowohl in Breite als auch in Tiefe eingestellt werden können, um Rillen ausschneiden zu können, welche zum Einlegen von Elektrokabeln, kleinen Hüllen oder Röhren in aus Gips hergestellten Trennwänden, in leichten Zwischenwänden oder in mit Gips verkleideten Isoliergegenständen, die zum Temperatur- und Feuchtigkeitsschutz Wänden verkleiden,
**gekennzeichnet durch** :
- die genannte Drehachse, welche die Pendelbewegung verursacht, besteht für den aus dem Stichsägekörper vordringenden Teil, aus einer viereckigen bzw. einer rechteckigen Form oder aus einem Profil in jeglicher Winkelform, und drängt **durch** eine Öffnung oder **durch** ein Stück Hülle, das mit einem Teilstück in Verbindung steht und zum Körper der Säge gehört, sodass während dem Rundschneiden der Rille die verursachten Drehungsbemühungen nicht weitergeleitet werden ;
- wobei die genannte senkrechte Achse der Stichsäge entweder aus dem direkten Fortfahren der Achse besteht oder aus einem angelöteten Teil, oder aus der Verbindung **durch** Gewindeschneiden am Endteil dieser Achse.
- ein Sägeblatthalter bestehend aus Teilen: ein Hinterteil (3), ein Vorderteil (4) und zwei Verbindungsschrauben (5), wobei der in Frage stehende Sägeblatthalter mit der genannten senkrechten Achse der Sticksäge **durch** das Hinterteil (3) solidarisch ist; die beiden Hinter- (3)und Vorderteile (4) sind jeweils mit übereinstimmenden senkrechten Rillen laut vorbestimmten Abstände (e1), (e2), et (e3) versehen(s); wobei die genannten Abstände zwischen den Rillen entsprechend der in den Wänden durchzuführenden Rillenbreiten abgestimmt werden ; die genannten senkrechten Rillen in den zwei hinteren (3) und vorderen (4) Teilen des vorliegenden Sägeblatthalters bestehen aus einer Breite, die der Dicke der genannten zwei Sägeblättern entsprechen und eine Tiefe aufweisen, die leicht unter der Hälfte der Breite der genannten Sägeblättern liegt, um einen leichten Spielsatz für das Anziehen während der Montage der vorliegenden Hinter- (3) und Vorderteilen (4) zu gewährleisten ; der Hinterteil (3) des Sägeblatthalters beträgt an beiden Extremitäten eine Randleiste (r), die das angepasste Einfügen des Vorderteils (4) vom genannten Sägeblatthalter ermöglicht ; die in Frage stehenden beiden Sägeblätter werden, nachdem sie in ihren respektiven Rillen laut gewähltem Abstand eingefügt sind, zwischen die beiden Hinter- (3) und Vorderteile (4) des Sägeblatthalters mittels zwei Schrauben (5) eingeklemmten ; da der genannte Vorderteil (4) zwischen den zwei äußersten Randleisten (r) des Hinterteils (3) gesteuert bleiben, wird der Rutsch zur Seite vermieden und somit bleiben die beiden Sägeblätter der Stichsäge in geeigneter Position.

2. Stichsäge laut Forderung 1 **gekennzeichnet durch** eine trapezförmige und waagerechte Rille (s3) oder (s4) , die auf der inneren Front und am unteren Teil der beiden Hinter- (3) und Vorderelemente (4) des vorliegenden Sägeblatthalters hergestellt wurde ; die genannte trapezförmige Rille, die das Einfügen des Formstahls, das gewisse Sägeblätter aufweisen, ermöglicht bzw. das senkrechte Aufrechthalten der in Frage stehenden Sägeblättern sichert.

3. Stichsäge gemäß Forderung 2 **gekennzeichnet durch** ein zylindrisches Führungsteil (17), das sich hinter die zwei bewegenden Blätter ansetzt und gleichzeitig ihr Spreizen und ihre senkrechte Position bewahrt ; das vorliegende zylindrische Führungsteil (17), das über kreisförmige Rillen verfügt, in welche die genannten Sägeblätter sich einfügen ; die Breite dieser Rillen stimmen mit der Dicke der genannten Sägeblätter überein und ihre Positionen (e'1, e'2 et e'3) stimmen genau mit den Positionen der senkrechten Rillen überein (e1, e2 et e3), die in den zwei Hinter- (3) und Vorderteilen (4) des genannten Sägeblatthalters ausgeführt wurden und in welche die genannten Sägeblätter sich einfügen ; das genannte zylindrische Führungsteil (17) befindet sich in freier Drehung auf einer Achse (9) und wird von zwei Armen unterstützt (7) ; eine gespaltete Rondelle (8),die in einer kreisförmigen Rille an jedem Ende der genannten Achse eingefasst ist (9), hält das Führungselement in seiner Position zwischen den zwei Armen (17) aufrecht ; wobei die genannten zwei Arme am Körper der Stichsäge fixiert sind.

4. Stichsäge laut Forderung 3 **gekennzeichnet durch** eine Einheit bestehend aus einer Stützsohle (12), einer beweglichen (11) und einer festen Stütze (10); da sich die Sohle (12) **durch** diese bewegliche Stütze (11) schräg stellen lässt, kann man die Schnitt-Tiefe der Sägeblättern in dem zu schneidenden Gegenstand und auch gemäß der Tiefe der herzustellenden Rillen entsprechend regeln ; die genannte Sohle (12) ist an die genannte bewegliche Stütze (11) durch drei Bolzen befestigt (16) ; die vorliegende bewegliche Stütze (11) ist mit vier Ösen versehen, bewegt sich auf einer Achse (13) und wird **durch** einen Bolzen (14) in Stellung gehalten ; die vier Ösen der genannten beweglichen Stütze bestehen aus folgenden Elemente :
- zwei hintere Ösen (19), die zur Durchführung einer Achse (3)mit einem Loch versehen sind und somit Dank seines Durchganges in den Bohrungen (q) der genannten festen Stütze (10), die Bewegung der gesamten beweglichen Stütze (11) und der Stützsohle (12) ermöglichen ;
- zwei vordere Ösen(20), die zum Durchgang einer Achse(14) mit einem Loch versehen sind und die in der festen Stütze (10) vorhandenen beiden bogenförmigen Schlitzen (a) durchfließen , was die Einstellung der Schnitt-Tiefe der zwei Sägeblättern ermöglicht; die Standhaltung wird **durch** das Anziehen der Mutter auf ihrer Achse (14) gesichert ; die genannten Ösen sind miteinander mit einem röhrförmigen Stehbolzen (e) verbunden , der ihren Abstand während dem Anziehen der Mutter auf ihrer Achse (14) bewahrt ; die feste Stütze (10) ist am Körper der Stichsäge **durch** zwei Schrauben (18) fixiert, wofür sie die Löcher (t) der festen Stütze benutzen.

5. Stichsäge gemäß Forderung 4 **gekennzeichnet durch** einen Einschnitt in V Form in der Mitte und am vorderen Rand der genannten Stützsohle (12) ; der genannte Einschnitt ermöglicht, während dem Ausschneiden der Rille, die Linieführung genau zu folgen.

6. Stichsäge gemäß Forderung 5 **gekennzeichnet durch** Schlitze (27), (28), die in der genannten Stützsohle (12) ausgeschnitten wurden, um das seitliche Einstellen der Position der vorerwähnten Stützsohle (12) auf der festen Stütze (11) zu veranlassen, wobei dieses seitliche Einstellen die Fähigkeit erteilt, die Ausschneidungen in den Trennwänden so nahe wie möglich an den Hindernissen wie zum Beispiel Tür- oder Fensterrahmen bzw. einspringende Winkel, wobei in solchem Fall der Einschnitt in V Form nicht als Wegleitung des Ausschneidens dient ; eine Ausschneidung (26) am vorderen Teil der genannten Sohle (12) ist dafür vorgesehen, sodass die zwei Sägeblätter durchdrängen können indem man gleichzeitig ihre seitliche Regelung vornimmt.

7. Stichsäge gemäß Forderung 6 **gekennzeichnet durch** die Benützung von Sägeblättern, deren Länge der gewünschten Schnitt-Tiefe angepasst sind ; die bewegliche Stütze (11) der Stützsohle (12) ist waagerecht ohne Schrägeinstellung auf ihrer Stütz (10) befestigt.
